# EUROPEAN PATENT APPLICATION

(11) **EP 4 752 796 A1**
(43) Date of publication of application: **03.06.2026**
(21) Application number: 25219628.2
(22) Date of filing: 01.12.2025
(51) Int. Cl.: G06Q 10/04, G06Q 10/047, G06Q 10/0631, G06Q 50/40

(54) **METHOD OF AND SYSTEM FOR OPTIMIZING DE-ICING OPERATIONS OF AIRCRAFTS**

(30) Priority: 29.11.2024 US 202463726420 P
(71) Applicant: 12292939 CANADA INC., Montréal QC H9S 2H4 (CA)
(72) Inventor: DESBIENS, Raphaël, Quebec City (Québec), G1C 8C2 (CA); CHABOT, Thomas, Lévis (Québec), G6W 0W6 (CA); CORTESI, Davide, 10245 BERLIN (DE); DESCHATELETS, David, Lévis (Québec), G6Z 3L6 (CA); VOYER, Jean-Christophe, Montréal (Québec), H3K 2H3 (CA)
(74) Representative: Cristinelli, Luca

(57) **Abstract**

There is provided a method and server for optimizing de-icing operations of a plurality of aircrafts. The method includes: receiving information about a state of current de-icing operations from a control tower and a plurality of de-icing areas; running a second intelligent agent to generate estimated de-icing requirements based at least in part on the state of the current de-icing operations; running a first intelligent agent to optimize decisions regarding allocations of the plurality of aircrafts and resources relating to the de-icing areas, based at least in part on the state of the current de-icing operations and the estimated de-icing requirements, thereby generating allocation decisions; and sending the allocation decisions to the control tower and the de-icing areas for use to cause each of the plurality of aircrafts to move to selected ones of the plurality of de-icing areas.

## Description

### Cross-reference to related applications

The present application claims priority on US Provisional Patent Application No. 63/726,420 filed on November 29, 2024, the content of which is incorporated herein by reference.

### Field

The present technology relates to de-icing operations of aircrafts in general and more specifically to methods, systems and non-transitory storage mediums for automating resource allocation related to de-icing activities in aerodromes.

### Background

Aircraft de-icing is a critical operation in cold-weather airports, essential for ensuring safe takeoffs and maintaining flight schedules. The efficient assignment of aircraft to de-icing pads is a complex logistical challenge that impacts airport operations, airline punctuality, and resource utilization. This problem involves optimizing the allocation of limited de-icing resources while considering multiple dynamic factors such as varying aircraft sizes, timesensitive departure schedules, changing weather conditions, and de-icing areas capacities.

Conventional de-icing operations are manual, complex, and require numerous real-time decisions, especially during winter storms. The performance of de-icing operations directly affects the fluidity of airport operations and glycol consumption, which has environmental implications and may result in wasted resources.

There exists a need for an improved system and/or system that overcomes the deficiencies described above.

### Summary

It is an object of the present technology to ameliorate at least some of the inconveniences present in the prior art. One or more implementations of the present technology may provide and/or broaden the scope of approaches to and/or methods of achieving the aims and objects of the present technology.

Developers of the present technology have appreciated that an effective solution to the deficiencies of conventional systems has the potential to significantly improve operational efficiency, reduce costs, and increase efficiency of passenger movement in cold-climate airports.

One of the technical problems addressed by the embodiments of the present technology arises because de-icing management systems support the complex process of de-icing aircraft at an airport during cold weather operations. These systems record and display information entered manually by operation teams as they assign incoming aircraft (tasks) to de-icing areas (gates or bays) and deploy de-icing trucks (resources) to these areas, all in a rapidly evolving environment.

One or more implementations of the present technology have been developed based on developers' appreciation that an effective solution to this problem has the potential to significantly improve operational efficiency, reduce costs, and increase efficiency of passenger movement in cold-climate airports.

More specifically, developers have appreciated that a system that automates the decision process for allocating resources related to de-icing activities (aircrafts, trucks, de-icing areas) in aerodromes provides technical benefits. This system may consist of a computer program running on a computer (local, remote, or cloud based) that receives data recorded from sensors as well as from de-icing operators through de-icing management apps, and output in real time decisions for the allocation of de-icing trucks in de-icing areas and/or for the assignment of aircrafts to de-icing areas.

The present technology enables improving the efficiency of the de-icing management systems in one or more ways. The system may monitor the occupancy of de-icing areas, the location of de-icing trucks, and the backlog of aircrafts that requested de-icing treatments, providing an output decision that optimizes the efficiency of de-icing operations over a given period of time. The output decision may be communicated to operators, aircrafts, and trucks for moving into position to provide/receive de-icing treatment.

Thus, one or more implementations of the present technology are directed to a method of and a system for optimizing de-icing operations of aircrafts.

According to a first broad aspect, there is provided a system for optimizing de-icing operations of a plurality of aircrafts, the system comprising: a processor; a non-transitory storage medium operatively connected to the processor, the non-transitory storage medium comprising computer-readable instructions; the processor, upon executing the instructions, being configured for: receiving a state of current de-icing operations from at least one of a control tower and one of a plurality of de-icing areas; running a first intelligent agent to optimize decisions regarding allocations of the plurality of aircrafts and resources relating to the de-icing areas, based at least in part on the state of the current de-icing operations, thereby generating allocation decisions at least for selected ones of the plurality of de-icing areas; and sending the allocation decisions to the control tower and the selected ones of the plurality of de-icing areas.

In some embodiments, the first intelligent agent generates the allocation decisions using operation research algorithms.

In some embodiments, the processor is further configured for running a second intelligent agent to generate estimated de-icing requirements based at least in part on the state of the current de-icing operations; and wherein optimization of decisions by the first intelligent agent is further based on the estimated de-icing requirements.

In some embodiments, the second intelligent agent generates estimated de-icing requirements using one or more machine learning regression models that learn relationships involving at least one of de-icing treatment durations or de-icing treatment quantities.

In some embodiments, the processor is further configured for causing de-icing of at least some of the plurality of aircrafts based on the allocation decisions.

In some embodiments, the allocation decisions comprise use of the resources relating to the de-icing areas, the resources comprising one or more of a cold storage, paths for aircrafts in motion to the de-icing areas, de-icing trucks, input taxiways, or output taxiways.

In some embodiments, the first intelligent agent monitors arrival of the plurality of aircrafts in the input taxiways, thereby adding to the state of the current de-icing operations.

In some embodiments, the first intelligent agent generates the allocation decisions to assign the plurality of aircrafts from one of the input taxiways to one of the de-icing areas, taking account one or more of a backlog of aircrafts, an occupancy and capacity of the de-icing areas, and locations of the de-icing trucks.

In some embodiments, the first intelligent agent generates the allocation decisions to assign the plurality of aircrafts from one of the input taxiways to one of the de-icing areas to further include re-allocating the de-icing trucks to different de-icing areas.

In some embodiments, the optimization of decisions by the first intelligent agent is further based on external data sources, the external data sources comprising at least one of weather measurements, weather forecasts, or schedule plans for the plurality of aircrafts.

According another broad aspect, there is provided a method for optimizing de-icing operations of a plurality of aircrafts, the method being executed by a processor, the method comprising: receiving a state of current de-icing operations from at least one of a control tower and one of a plurality of de-icing areas; running a first intelligent agent to optimize decisions regarding allocations of the plurality of aircrafts and resources relating to the de-icing areas, based at least in part on the state of the current de-icing operations, thereby generating allocation decisions at least for selected ones of the plurality of de-icing areas; and sending the allocation decisions to the control tower and the selected ones of the plurality of de-icing areas.

In some embodiments, the first intelligent agent generates the allocation decisions using operation research algorithms.

In some embodiments, the method further comprises running a second intelligent agent to generate estimated de-icing requirements based at least in part on the state of the current de-icing operations; and wherein optimization of decisions by the first intelligent agent is further based on the estimated de-icing requirements.

In some embodiments, the second intelligent agent generates estimated de-icing requirements using one or more machine learning regression models that learn relationships involving at least one of de-icing treatment durations or de-icing treatment quantities.

In some embodiments, the method further comprises comprising causing de-icing of at least some of the plurality of aircrafts based on the allocation decisions.

In some embodiments, the allocation decisions comprise use of the resources relating to the de-icing areas, the resources comprising one or more of a cold storage, paths for aircrafts in motion to the de-icing areas, de-icing trucks, input taxiways, or output taxiways.

In some embodiments, the first intelligent agent monitors arrival of the plurality of aircrafts in the input taxiways, thereby adding to the state of the current de-icing operations.

In some embodiments, the first intelligent agent generates the allocation decisions to assign the plurality of aircrafts from one of the input taxiways to one of the de-icing areas, taking account one or more of a backlog of aircrafts, an occupancy and capacity of the de-icing areas, and locations of the de-icing trucks.

In some embodiments, the first intelligent agent generates the allocation decisions to assign the plurality of aircrafts from one of the input taxiways to one of the de-icing areas to further include re-allocating the de-icing trucks to different de-icing areas.

In some embodiments, the optimization of decisions by the first intelligent agent is further based on external data sources, the external data sources comprising at least one of weather measurements, weather forecasts, or schedule plans for the plurality of aircrafts.

According a further broad aspect, there is provided a system for optimizing de-icing operations of a plurality of aircrafts, the system comprising: a de-icing management system in communication with a control tower and a plurality of de-icing areas, the de-icing management system configured to: receive a state of current de-icing operations from at least one of the control tower and one of the plurality of de-icing areas; receive allocation decisions from a server; and send the allocation decisions to the control tower and selected ones of the plurality of de-icing areas; the server in communication with the de-icing management system, the server configured to: receive the state of the current de-icing operations from the de-icing management system; run a first intelligent agent to optimize decisions regarding allocations of the plurality of aircrafts and resources relating to the de-icing areas, based at least in part on the state of the current de-icing operations, thereby generating the allocation decisions at least for the selected ones of the plurality of de-icing areas; and send the allocation decisions to the de-icing management system.

In some embodiments, the first intelligent agent generates the allocation decisions using operation research algorithms.

In some embodiments, the server is further configured to run a second intelligent agent to generate estimated de-icing requirements based at least in part on the state of the current de-icing operations; and optimization of decisions by the first intelligent agent is further based on the estimated de-icing requirements.

In some embodiments, the second intelligent agent generates estimated de-icing requirements using one or more machine learning regression models that learn relationships involving at least one of de-icing treatment durations or de-icing treatment quantities.

In some embodiments, the de-icing management system is further configured to cause de-icing of at least some of the plurality of aircrafts based on the allocation decisions.

In some embodiments, the allocation decisions comprise use of the resources relating to the de-icing areas, the resources comprising one or more of a cold storage, paths for aircrafts in motion to the de-icing areas, de-icing trucks, input taxiways, or output taxiways.

In some embodiments, the first intelligent agent monitors arrival of the plurality of aircrafts in the input taxiways, thereby adding to the state of the current de-icing operations.

In some embodiments, the first intelligent agent generates the allocation decisions to assign the plurality of aircrafts from one of the input taxiways to one of the de-icing areas, taking account one or more of a backlog of aircrafts, an occupancy and capacity of the de-icing areas, and locations of the de-icing trucks.

In some embodiments, the first intelligent agent generates the allocation decisions to assign the plurality of aircrafts from one of the input taxiways to one of the de-icing areas to further include re-allocating the de-icing trucks to different de-icing areas.

In some embodiments, the optimization of decisions by the first intelligent agent is further based on external data sources, the external data sources comprising at least one of weather measurements, weather forecasts, or schedule plans for the plurality of aircrafts.

### Terms and Definitions

In the context of the present specification, a "server" is a computer program that is running on appropriate hardware and is capable of receiving requests (e.g., from computing devices) over a network (e.g., a communication network), and carrying out those requests, or causing those requests to be carried out. The hardware may be one physical computer or one physical computer system, but neither is required to be the case with respect to the present technology. In the present context, the use of the expression a "server" is not intended to mean that every task (e.g., received instructions or requests) or any particular task will have been received, carried out, or caused to be carried out, by the same server (i.e., the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expressions "at least one server" and "a server".

In the context of the present specification, "computing device" is any computing apparatus or computer hardware that is capable of running software appropriate to the relevant task at hand. Thus, some (non-limiting) examples of computing devices include general purpose personal computers (desktops, laptops, netbooks, etc.), mobile computing devices, smartphones, and tablets, and network equipment such as routers, switches, and gateways. It should be noted that a computing device in the present context is not precluded from acting as a server to other computing devices. The use of the expression "a computing device" does not preclude multiple computing devices being used in receiving/sending, carrying out or causing to be carried out any task or request, or the consequences of any task or request, or steps of any method described herein. In the context of the present specification, a "client device" refers to any of a range of end-user client computing devices, associated with a user, such as personal computers, tablets, smartphones, and the like.

In the context of the present specification, the expression "computer-readable storage medium" (also referred to as "storage medium" and "storage") is intended to include non-transitory media of any nature and kind whatsoever, including without limitation RAM, ROM, disks (CD-ROMs, DVDs, floppy disks, hard drives, etc.), USB keys, solid state drives, tape drives, etc. A plurality of components may be combined to form the computer information storage media, including two or more media components of a same type and/or two or more media components of different types.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the expression "information" includes information of any nature or kind whatsoever capable of being stored in a database. Thus, information includes, but is not limited to, audiovisual works (images, movies, sound records, presentations etc.), data (location data, numerical data, etc.), text (opinions, comments, questions, messages, etc.), documents, spreadsheets, lists of words, etc.

In the context of the present specification, unless expressly provided otherwise, an "indication" of an information element may be the information element itself or a pointer, reference, link, or other indirect mechanism enabling the recipient of the indication to locate a network, memory, database, or other computer-readable medium location from which the information element may be retrieved. For example, an indication of a document could include the document itself (i.e., its contents), or it could be a unique document descriptor identifying a file with respect to a particular file system, or some other means of directing the recipient of the indication to a network location, memory address, database table, or other location where the file may be accessed. As one skilled in the art would recognize, the degree of precision required in such an indication depends on the extent of any prior understanding about the interpretation to be given to information being exchanged as between the sender and the recipient of the indication. For example, if it is understood prior to a communication between a sender and a recipient that an indication of an information element will take the form of a database key for an entry in a particular table of a predetermined database containing the information element, then the sending of the database key is all that is required to effectively convey the information element to the recipient, even though the information element itself was not transmitted as between the sender and the recipient of the indication.

In the context of the present specification, the expression "communication network" is intended to include a telecommunications network such as a computer network, the Internet, a telephone network, a Telex network, a TCP/IP data network (e.g., a WAN network, a LAN network, etc.), and the like. The term "communication network" includes a wired network or direct wired connection, and wireless media such as acoustic, radio frequency (RF), infrared, and other wireless media, as well as combinations of any of the above.

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "server" and "third server" is not intended to imply any particular order, type, chronology, hierarchy, or ranking (for example) of/between the server, nor is their use (by itself) intended to imply that any "second server" must necessarily exist in any given situation. Further, as is discussed herein in other contexts, reference to a "first" element and a "second" element does not preclude the two elements from being the same actual realworld element. Thus, for example, in some instances, a "first" server and a "second" server may be the same software and/or hardware; in other cases they may be different software and/or hardware.

Implementations of the present technology each have at least one of the above-mentioned objects and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects, and advantages of implementations of the present technology will become apparent from the following description, the accompanying drawings, and the appended claims.

### Brief description of the drawings

For a better understanding of the present technology, as well as other aspects and further features thereof, reference is made to the following description which is to be used in conjunction with the accompanying drawings, where:
FIG. 1 depicts a schematic diagram of a computing device in accordance with one or more non-limiting implementations of the present technology.
FIG. 2 depicts a schematic diagram of a communication system in accordance with one or more non-limiting implementations of the present technology.
FIG. 3 depicts a schematic diagram of de-icing resources in an aerodrome in accordance with one or more non-limiting implementations of the present technology.
FIG. 4 depicts a schematic diagram of communication flow between intelligent agents for a de-icing management system in accordance with one or more non-limiting implementations of the present technology.
FIG. 5A depicts a graph of an example of an initial schedule for de-icing operations prior to optimization by a de-icing management system in accordance with one or more non-limiting implementations of the present technology.
FIG. 5B depicts a graph of an example of an optimized schedule for de-icing operations after optimization by a de-icing management system in accordance with one or more non-limiting implementations of the present technology.
FIG. 6 depicts a graph of intelligent agent predictions of de-icing fluid quantities by a de-icing management system in accordance with one or more non-limiting implementations of the present technology.
FIG. 7 depicts a flow chart of a method for optimizing de-icing operations of aircrafts in accordance with one or more non-limiting implementations of the present technology.

### Detailed description

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor" or a "graphics processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In one or more non-limiting implementations of the present technology, the processor may be a general purpose processor, such as a central processing unit (CPU) or a processor dedicated to a specific purpose, such as a graphics processing unit (GPU). Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

### Example Technical Problem

De-icing management applications record information about aircrafts requesting de-icing treatment (various possible treatments on different parts of the aircraft, including anti-icing treatments) as well as current occupancy of de-icing areas, position of aircrafts (gate, taxiway, ramp, de-icing bay, output ramp or output taxiway), status of aircrafts (moving, parked, waiting for assignment, etc.), communications between de-icing teams and control tower, along with related timestamps of all events recorded. The information is displayed on the app to present the current state of the de-icing operations, allowing operators to make real-time decisions for the allocation of resources and the assignment of aircrafts. Operators update manually the information whenever the state of the de-icing operations changes. The operators include employees located in the control tower as well as employees on the ground at de-icing locations.

The technical problem is that this does not always ensure all aircraft are safely de-iced and can depart on time, while maximizing the utilization of de-icing resources and minimizing operational disruptions. This would require a dynamic, adaptive process that can quickly respond to changing conditions and make optimal decisions in a high-pressure environment.

In other words, the technical problem involves optimizing the allocation of limited de-icing resources while considering multiple dynamic factors such as varying aircraft sizes, timesensitive departure schedules, changing weather conditions, and pad capacities. The technical problem also includes inefficient de-icing resource allocation that causes added waiting time for aircrafts and fuel wasted during waiting time.

### Overview of an Example Technical Solution

An example technical solution is an intelligent agent implemented as a computer program running on a local, remote, or cloud computer for automatically assigning and moving resources (e.g., aircrafts, de-icing trucks) in the best location and best sequence of action considering a current state of the resources, aircraft backlog, and operation constraints. The intelligent agent improves daily efficiency of de-icing operations as compared to the limited capacities of human operators to make optimal decisions in situations involving a large amount of information.

Alternatively, or in addition, the intelligent agent may be implemented as a control system that takes the place of human operators. This means that the intelligent agent controls (e.g., locally or remotely) the functioning of resources (e.g., aircrafts, de-icing trucks) and/or equipment (e.g., garage doors, conveyor belts, de-icing fluid dispensers). In implementations where there are multiple intelligent agents: none of the intelligent agents may be implemented as control systems, one or more of the intelligent agents may be implemented as control systems while the others do not directly control resources and/or equipment, or all of the intelligent agents may be implemented as control systems.

### Features of the Example Technical Solution

The intelligent agent optimizes the assignment decisions for the current operation state, which is defined as having at least one or more of four parts.

Part 1: The list de-icing requests (backlog). This includes aircraft characteristics (aircraft identifier, model, size, etc.). This also includes requested de-icing treatment (aircraft parts requiring treatment, type of treatment: de-icing and or anti-icing).

Part 2: The location of aircrafts ready for de-icing.

Part 3: The occupancy and availability of de-icing areas.

Part 4: The location and availability of de-icing trucks.

Whenever the state is modified (new request, change of availability, etc.), a new optimization can be performed by the intelligent agent to update the assignment decisions.

### Objectives of the Example Technical Solution

The intelligent agent integrates artificial intelligence (AI) components into de-icing operations to improve efficiency objectives.

In at least one embodiment, one objective is to improve resource allocation, including allocation of de-icing trucks and teams to de-icing areas, and allocation of aircrafts to de-icing areas.

In at least one embodiment, another objective is to reduce waiting time of aircrafts and fuel cost of aircrafts while waiting or during de-icing.

In at least one embodiment, another objective is to reduce glycol consumption during de-icing operations.

In at least one embodiment, another objective is to improve throughput of de-icing operations (number of aircrafts de-iced per hour) and reduce flight delays.

In at least one embodiment, another objective is to improve the efficiency of de-icing operation teams (e.g., feedback for training).

### Technical Considerations for the Example Technical Solution

The optimization process performed by the intelligent agent may implement one or many algorithms of the following categories: operations research; reinforcement learning.

Operation research algorithms (a branch of AI) solve problems with the development and application of analytical methods to improve decision-making.

Reinforcement learning algorithms (another branch of AI) solve problems using an interdisciplinary area of machine learning and optimal control concerned with how an intelligent agent should take actions in a dynamic environment in order to maximize a reward signal.

### Additional Features of the Example Technical Solution

The intelligent agent outputs real-time optimized decisions to allocate resources efficiently. Those decisions include one or more of the following.

One decision may be which aircraft to assign to which de-icing area (bays).

Another decision may be which de-icing trucks to assign to which de-icing areas (bays or terminal gates).

Another decision may be the number of de-icing trucks to assign to which de-icing areas (bays or terminal gates).

Another decision may be the number of de-icing trucks to assign to the treatment of an aircraft.

Another decision may be how to sequence the de-icing operations to optimize efficiency.

These decisions are preferably updated constantly as new information becomes available, such as new aircraft arrivals or unexpected delays in the de-icing process. The decisions are communicated to aircrafts, operators, and de-icing trucks to move them to the next optimal location for providing/receiving de-icing treatment.

The optimization of efficiency objectives is performed globally, over an extended period of time. The intelligent agent normally does not provide an optimal decision for a specific aircraft, but an optimal sequence of decisions for a sequence of aircrafts. Therefore, in some implementations, if acceptable, it may happen that some aircrafts are slightly delayed such that overall the upcoming sequence of aircrafts generates greater benefits from the optimal decision of the intelligent agent.

### Second Intelligent Agent in the Example Technical Solution

There may be a second intelligent agent that predicts de-icing treatment duration and/or de-icing fluid quantities required for various allocation scenarios (or in short, estimating de-icing requirements). When a second intelligent agent is part of the example technical solution, the intelligent agent that optimizes the assignment decisions for the current operation state may be referred to as the "first intelligent agent".

The second intelligent agent makes predictions, which may be in the form of estimates of de-icing requirements. The second intelligent agent may receive information from a de-icing management system and/or external data sources to generate predictions about de-icing treatments. The second intelligent agent sends these predictions to the first intelligent agent to improve (or optimize) the decisions made by the first intelligent agent.

### Third Intelligent Agent in the Example Technical Solution

There may be a third intelligent agent that predicts in which order aircrafts that requested de-icing treatment are the most likely to arrive at the de-icing area where they will be assigned a de-icing bay. The third intelligent agent may receive information from a de-icing management system and/or external data sources to generate predictions about arrival order and time. The third intelligent agent sends these predictions to the first intelligent agent to improve (or optimize) the decisions made by the first intelligent agent.

With these fundamentals in place, some non-limiting examples will be considered to illustrate various implementations of aspects of the present technology.

### Computing device

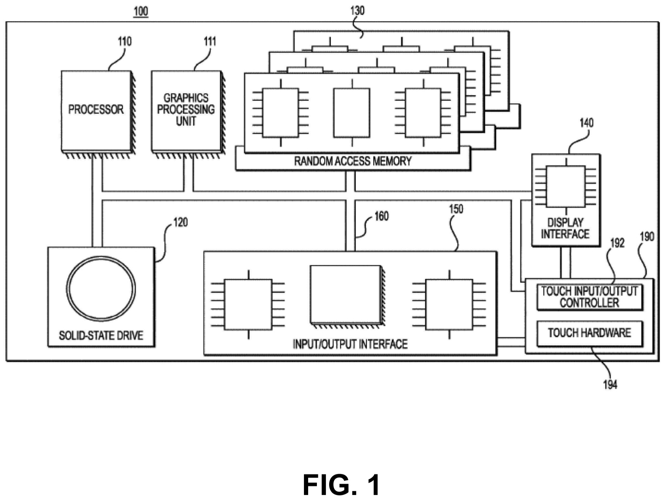

Referring to FIG. 1, there is shown a computing device 100 suitable for use with some implementations of the present technology, the computing device 100 comprising various hardware components including one or more single or multi-core processors collectively represented by processor 110, a graphics processing unit (GPU) 111, a solid-state drive 120, random-access memory 130, a display interface 140, and an input/output interface 150.

Communication between the various components of the computing device 100 may be enabled by one or more internal and/or external buses 160 (e.g., a PCI bus, universal serial bus, IEEE 1394 "Firewire" bus, SCSI bus, Serial-ATA bus, etc.), to which the various hardware components are electronically coupled.

The input/output interface 150 may be coupled to a touchscreen 190 and/or to the one or more internal and/or external buses 160. The touchscreen 190 may be part of the display. In one or more implementations, the touchscreen 190 is the display. The touchscreen 190 may equally be referred to as a screen 190. In the implementations illustrated in FIG. 1, the touchscreen 190 comprises touch hardware 194 (e.g., pressure-sensitive cells embedded in a layer of a display allowing detection of a physical interaction between a user and the display) and a touch input/output controller 192 allowing communication with the display interface 140 and/or the one or more internal and/or external buses 160. In one or more implementations, the input/output interface 150 may be connected to a keyboard (not shown), a mouse (not shown), or a trackpad (not shown) allowing the user to interact with the computing device 100 in addition or in replacement of the touchscreen 190.

According to implementations of the present technology, the solid-state drive 120 stores program instructions suitable for being loaded into the random-access memory 130 and executed by the processor 110 and/or the GPU 111 for a system for optimizing de-icing operations of aircrafts. For example, the program instructions may be part of a library or an application.

The computing device 100 may be implemented as a server, a desktop computer, a laptop computer, a tablet, a smartphone, a personal digital assistant, or any device that may be configured to implement the present technology, as it may be understood by a person skilled in the art.

### System

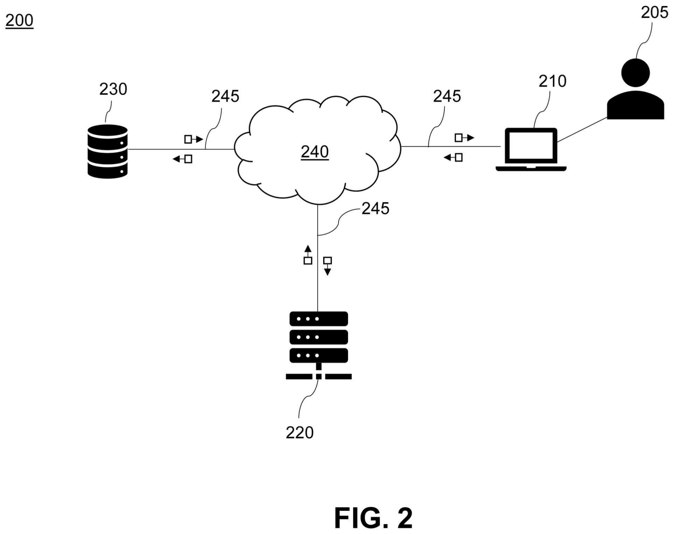

Referring to FIG. 2, there is shown a schematic diagram of a system 200, the system 200 being suitable for implementing one or more non-limiting implementations of the present technology. It is to be expressly understood that the system 200 as shown is merely an illustrative implementation of the present technology. Thus, the description thereof that follows is intended to be only a description of illustrative examples of the present technology. This description is not intended to define the scope or set forth the bounds of the present technology. In some cases, what are believed to be helpful examples of modifications to the system 200 may also be set forth below. This is done merely as an aid to understanding, and, again, not to define the scope or set forth the bounds of the present technology. These modifications are not an exhaustive list, and, as a person skilled in the art would understand, other modifications are likely possible. Further, where this has not been done (i.e., where no examples of modifications have been set forth), it should not be interpreted that no modifications are possible and/or that what is described is the sole manner of implementing that element of the present technology. As a person skilled in the art would understand, this is likely not the case. In addition, it is to be understood that the system 200 may provide in certain instances simple implementations of the present technology, and that where such is the case they have been presented in this manner as an aid to understanding.

As persons skilled in the art would understand, various implementations of the present technology may be of a greater complexity.

In one or more implementations of the present technology, the system 200 is the system for optimizing de-icing operations of aircrafts. In one or more implementations of the present technology, the system 200 is part of the system for optimizing de-icing operations of aircrafts. In one or more implementations of the present technology, the system for optimizing de-icing operations of aircrafts is part of the system 200.

The system 200 comprises *inter alia* a client device 210 associated with a user 205, a server 220, and a database 230 communicatively coupled over a communications network 240.

### Client Device

The system 200 comprises a client device 210. The client device 210 is associated with the user 205. As such, the client device 210 can sometimes be referred to as a "computing device", "end user device", or "client computing device". It should be noted that the fact that the client device 210 is associated with the user 205 does not need to suggest or imply any mode of operation-such as a need to log in, a need to be registered, or the like. The client device 210 may be one particular device from amongst a plurality of client devices within the system 200.

The client device 210 comprises one or more components of the computing device 100 such as one or more single or multi-core processors collectively represented by the processor 110, the graphics processing unit (GPU) 111, the solid-state drive 120, the random access memory 130, the display interface 140, and the input/output interface 150.

It will be appreciated that the client device 210 may be implemented as a server, a desktop computer, a laptop, a smartphone, and the like.

In one or more implementations, the client device 210 is configured to execute an application (e.g., a browser application, a smartphone app, etc.) for the de-icing management system.

The purpose of the given browser application is to enable the user of the de-icing management system to access one or more web resources. How the given browser application is implemented is not particularly limited. Non-limiting examples of the given browser application that is executable by the client device 210 include Google^{™} Chrome^{™}, Mozilla^{™} Firefox^{™}, Microsoft^{™} Edge^{™}, and Apple^{™} Safari^{™}.

In one or more implementations, the user 205 may be an operator of the system for optimizing de-icing operations of aircrafts. The user 205 may be an agent (e.g., an intelligent agent) or a bot carrying out the role of the operator. The user 205 may be a person using a user device connected to the system for optimizing de-icing operations of aircrafts. The user 205 may be an external user device, such as one that is external to the system for optimizing de-icing operations of aircrafts.

### Server

The server 220 is configured to *inter alia:* (i) communicate with the client device 210, intelligent agents, and/or external resources (e.g., devices in or for de-icing areas, devices in or for a control tower); (ii) perform the functions of the intelligent agent(s); and/or (iii) perform the functions of the external resources.

How the server 220 is configured to do so will be explained in more detail herein below.

It will be appreciated that the server 220 can be implemented as a conventional computer server and may comprise at least some of the features of the computing device 100 shown in FIG. 1. In a non-limiting example of one or more implementations of the present technology, the server 220 is implemented as a server running an operating system (OS). Needless to say that the server 220 may be implemented in any suitable hardware and/or software and/or firmware or a combination thereof. In the disclosed non-limiting implementation of the present technology, the server 220 is a single server. In one or more alternative non-limiting implementations of the present technology, the functionality of the server 220 may be distributed and may be implemented via multiple servers (not shown).

The implementation of the server 220 is well known to the person skilled in the art. However, the server 220 comprises a communication interface (not shown) configured to communicate with various entities (such as the database 230, for example, and other devices potentially coupled to the communication network 240) via the communication network 240. The server 220 further comprises at least one computer processor (e.g., the processing device of the computing device 100) operationally connected with the communication interface and structured and configured to execute various processes to be described herein.

### Database

A database 230 is communicatively coupled to the server 220 and the client device 210 via the communications network 240 but, in one or more alternative implementations, the database 230 may be directly coupled to the server 220 without departing from the teachings of the present technology. Although the database 230 is illustrated schematically herein as a single entity, it will be appreciated that the database 230 may be configured in a distributed manner; for example, the database 230 may have different components, each component being configured for a particular kind of retrieval therefrom or storage therein.

The database 230 may be a structured collection of data, irrespective of its particular structure or the computer hardware on which data is stored, implemented or otherwise rendered available for use. The database 230 may reside on the same hardware as a process that stores or makes use of the information stored in the database 230, or it may reside on separate hardware, such as on the server 220. The database 230 may receive data from the server 220 for storage thereof and may provide stored data to the server 220 for use thereof.

In one or more implementations of the present technology, the database 230 is configured to store *inter alia:* (i) data related to de-icing operations; (ii) data related to operation optimization (e.g., processed by a first intelligent agent); (iii) data related to de-icing duration and/or fluid quantities (e.g., processed by a second intelligent agent); (iv) data related to aircraft arrival prediction (e.g., processed by a third intelligent agent); (v) data obtained from external data sources (e.g., those used by intelligent agents); (vi) data related to devices in or for de-icing areas; (vii) data related to devices in or for a control tower.

### Communication Network

In one or more implementations of the present technology, the communications network 240 is the Internet. In one or more alternative non-limiting implementations, the communication network 240 may be implemented as any suitable local area network (LAN), wide area network (WAN), a private communication network, or the like. It will be appreciated that implementations for the communication network 240 are for illustration purposes only. How a communication link 245 (not separately numbered) between the client device 210, the server 220, the database 230, and/or another computing device (not shown) and the communications network 240 is implemented will depend *inter alia* on how each computing device is implemented.

The communication network 240 may be used in order to transmit data packets amongst the different parts of the system 200. The communication network 240 may be used to transmit requests between: (i) a de-icing operations management system and an intelligent agent; (ii) the de-icing operations management system and devices in or for de-icing areas; (iii) the de-icing operations management system and devices in or for a control tower; (iv) the server 220 and the de-icing operations management system; and/or (v) the server 220 and any physical or logical device in communication with the de-icing operations management system . In another example, the communication network 240 may be used to transmit data between components of the same kind, such as between intelligent agents or between external resources (e.g., devices in or for de-icing areas, devices in or for a control tower).

### De-icing Resources

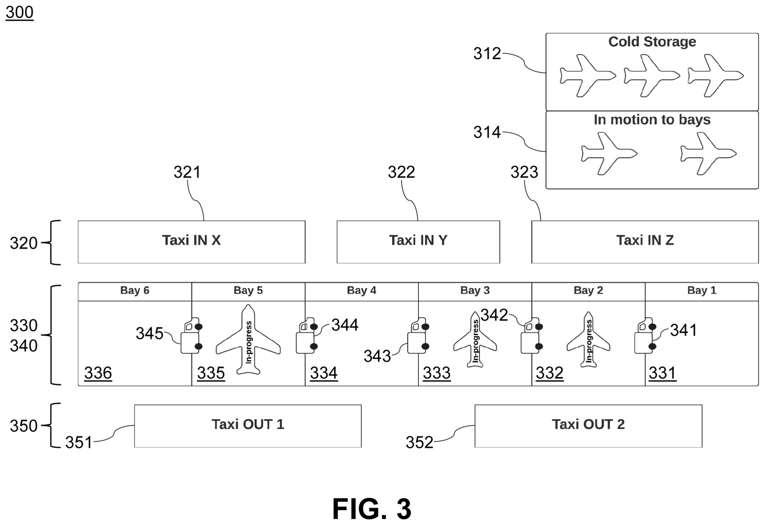

With reference to FIG. 3, there is shown a schematic diagram of de-icing resources 300 in an aerodrome in accordance with one or more non-limiting implementations of the present technology.

In one or more implementations of the present technology, the server 220 manages data processing by the de-icing resources 300 and/or manages communication with (or between) components of the de-icing resources 300. In alternative implementations, the server 220 may manage data processing and/or communication for at least a portion of the de-icing resources 300, and one or more other servers (not shown) may manage data processing and/or communication for other portions of the de-icing resources 300. In another implementation, a second server manages data processing and/or communication for at least a portion of the de-icing resources 300.

The de-icing resources 300 comprises some or all of the following components: cold storage 312 of aircrafts, paths 314 for aircrafts in motion to bays, input taxiways 320, de-icing bays 330, de-icing trucks 340, and output taxiways 350. The input taxiways 320 may include Taxi IN X 321, Taxi IN Y 322, and Taxi IN Z 333. The de-icing bays 330 may include Bay 1 331, Bay 2 332, Bay 3 333, Bay 4 334, Bay 5 335, and Bay 6 336. The de-icing trucks 340 may include truck 341, truck 342, truck 343, truck 344, and truck 345. The output taxiways 350 may include Taxi OUT 351 and Taxi OUT 352. The de-icing bays 330 may alternatively be referred to as de-icing areas.

The components shown in FIG. 3 may communicate with the components shown in FIG. 1 and/or FIG. 2. For example, one or more of the user 205, the client device 210, or the server 220 may communicate over the communications network 240 with devices and/or sensors located in or assigned to the cold storage 312, the paths 314, the input taxiways 320, the de-icing bays 330, the de-icing trucks 340, and/or the output taxiways 350.

The components shown in FIG. 3 may be equipped with the components shown in FIG. 1 and/or FIG. 2. For example, one or more of the user 205, the client device 210, or the server 220 may be located in or a part of the cold storage 312, the paths 314, the input taxiways 320, the de-icing bays 330, the de-icing trucks 340, and/or the output taxiways 350.

Some or all of the de-icing resources 300 are involved in de-icing operations. Aircrafts that request de-icing treatments are first logged in the cold storage 312 (which is typically not a physical location, as aircrafts are still at their gates), generating a backlog of de-icing requests that must be processed.

Once an aircraft is ready for treatment, it moves physically to one of the input taxiways 320, such as Taxi IN X 321, Taxi IN Y 322, and Taxi IN Z 333. In the example depicted in FIG. 3, there are six de-icing bays 330 (which can also be referred to as de-icing areas), with some of the de-icing bays 330 already occupied by aircrafts, namely Bay 2 332, Bay 3 333, and Bay 5 335. In between the de-icing bays 330 are located de-icing trucks 340, servicing one or two bays at a time. For example: de-icing truck 341 services Bay 1 331 and Bay 2 332; de-icing truck 342 services Bay 2 332 and Bay 3 333; de-icing truck 343 services Bay 3 333 and Bay 4 334; de-icing truck 344 services Bay 4 334 and Bay 5 335; and de-icing truck 345 services Bay 5 335 and Bay 6 336. Once the treatment is completed, aircrafts leave the de-icing bays 330 through one of the output taxiways 350, such as Taxi OUT 351 and Taxi OUT 352.

In the aerodrome, a first intelligent agent may provide operation optimization for the de-icing resources 300. The first intelligent agent may be controlled, for example, by the server 220. Alternatively, or in addition, the server 220 has installed thereon the first intelligent agent. The first intelligent agent monitors the arrival of aircrafts in the input taxiways 320. The first intelligent agent generates optimal decisions, assigning an aircraft from an input taxiway 320 to one of the de-icing bays 330, taking into account the backlog of aircrafts, the occupancy and capacity (size) of de-icing bays 330 and the locations of the de-icing trucks 340, which collectively may be referred to as the de-icing operations state. The decisions may also include re-allocating the de-icing trucks 340 to other de-icing bays 330. Once a decision is made, the aircrafts and the de-icing trucks 340 may move to the recommended location. This movement of aircrafts and the de-icing trucks 340 may be initiated or controlled automatically (e.g., by the server 220, by the first intelligent agent, or by an external program). Alternatively, or in addition, this movement of aircrafts and the de-icing trucks 340 may be initiated or controlled after receiving authorization (e.g., from the server 220, the control tower, or by an external program). Alternatively, or in addition, the first intelligent agent may provide recommendations on the number of de-icing trucks that should be assigned to each de-icing area, as well as the number of de-icing trucks from those specific de-icing areas that should be assigned to the de-icing treatment of a specific aircraft assigned to one of those de-icing areas.

In at least some of the embodiments described herein, the de-icing zones, which may also be referred to as bays, encompass different possible configurations. A bay may be temporarily combined with adjacent bays to form a larger bay that can accept larger aircrafts. A bay may include staging areas dedicated to this single bay or shared by multiple bays, where the next aircraft assigned to a bay may be positioned if this bay is currently occupied, in order to free the pad entry point for assigning other aircrafts in the queue. The embodiments described herein may include some or all configurations of de-icing zones.

### Communication Flow

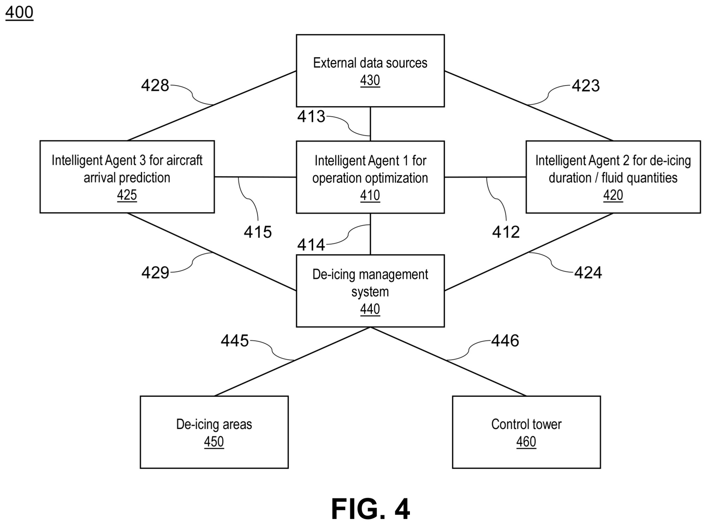

Now turning to FIG. 4, there is shown a schematic diagram of a communication flow 400 between intelligent agents for a de-icing management system in accordance with one or more non-limiting implementations of the present technology.

In one or more implementations of the present technology, the communication flow 400 is the flow of communication within the system for optimizing de-icing operations of aircrafts.

In one or more implementations of the present technology, the server 220 manages the communication flow 400. In alternative implementations, the server 220 may manage at least a portion of the communication flow 400, and one or more other servers (not shown) may manage other portions of the communication flow 400. In another implementation, a second server manages at least a portion of the communication flow 400.

The communication flow 400 comprises some or all of the following components: intelligent agent 1 410, intelligent agent 2 420, intelligent agent 3 425, external data sources 430, de-icing management system 440, de-icing areas 450, and control tower 460. The communications flow 400 comprises some or all of the connections between these components and/or the data being transmitted over these connections. For ease of reference, the intelligent agent 1 410 may be referred to as the "first intelligent agent", the intelligent agent 2 420 may be referred to as the "second intelligent agent", and the intelligent agent 3 425 may be referred to as the "third intelligent agent", where the modifiers "first", "second", and "third" are simply to distinguish between the three and not to imply any kind of order or importance.

The connections include connection 412, connection 413, connection 414, connection 415, connection 423, connection 424, connection 428, connection 429, connection 445, and connection 446. These connections may be unidirectional or bidirectional. For example, as depicted in FIG. 4: the connection 412 is between the intelligent agent 1 410 and the intelligent agent 2 420; the connection 413 is between the intelligent agent 1 410 and the external data sources 430; the connection 414 is between the intelligent agent 1 410 and the de-icing management system 440; the connection 415 is between the intelligent agent 1 410 and the intelligent agent 3 425; the connection 423 is between the intelligent agent 2 420 and the external data sources 430; the connection 424 is between the intelligent agent 2 420 and the de-icing management system 440; the connection 428 is between the intelligent agent 3 425 and the external data sources 430; the connection 429 is between the intelligent agent 3 425 and the de-icing management system 440; the connection 445 is between the de-icing management system 440 and the de-icing areas; and the connection 446 is between the de-icing management system 440 and the control tower 460.

The components shown in FIG. 4 may correspond to the components shown in FIG. 1, FIG. 2, and/or FIG. 3. For example, the user 205 may be an operator, manager, or custodian of the external data sources 430, the de-icing management system 440, the de-icing areas 450, and/or the control tower 460. The client device 210 may be a computing device controlling or managing the external data sources 430, the de-icing management system 440, the de-icing areas 450, and/or the control tower 460. The client device 210 may be located in or have remote access to the de-icing areas 450 and/or the control tower 460. The server 220 and/or a second server may correspond at least in some manner to the intelligent agent 1 410, the intelligent agent 2 420, the intelligent agent 3 425. the external data sources 430, the de-icing management system 440, the de-icing areas 450, and/or the control tower 460. The communications network 240 may encompass some or all of the connections 412, 413, 414, 415, 423, 424, 428, 429, 445, 446. The de-icing bays 330 may be the de-icing areas 450.

In one or more implementations of the present technology, each of the components of the communication flow 400 - the intelligent agent 1 410, the intelligent agent 2 420, the intelligent agent 3 425, the external data sources 430, the de-icing management system 440, the de-icing areas 450, and the control tower 460 - are programs run or managed by the server 220 and/or a second server. Alternatively, or in addition, a subset of the components of the communication flow 400 are programs run or managed by the server 220 and/or a second server. Alternatively, or in addition, each of the components of the communication flow 400 are distributed over different computing devices, of which the server 220 may monitor, manage, control, send to, and/or receive from these different computing devices.

The communication flow 400 shows interactions between the components. Each component may require a computing device. A given computing device may run programs from many of these components. The de-icing management system 440 gathers information about the state of de-icing operations from the control tower 460 and from the de-icing areas 450 (where operators and trucks are located). The de-icing management system 440 may also display information related to the state of operations on computers located in the control tower 460 or the de-icing areas 450. Another computer program may implement intelligent agent 1 410 for optimizing decisions regarding allocations of aircrafts and resources. The intelligent agent 1 410 receives information about the state of de-icing operations by consulting the de-icing management system 440. The intelligent agent 1 410 performs an optimization computation and outputs allocation decisions to the de-icing management system 440. The de-icing management system 440 may communicate the allocation decisions to the control tower 460 and from the de-icing areas 450.

The intelligent agent 1 410 may also receive some information from the external data sources 430 to improve its decisions (such as weather measurements and forecast, or aircrafts schedule plans). The intelligent agent 1 410 may also receive information from the intelligent agent 2 420 that predicts de-icing treatment duration and/or de-icing fluid quantities required for various allocation scenarios (or in short, estimating de-icing requirements). Those predictions are returned to the intelligent agent 1 410 to improve its decisions. The intelligent agent 2420 may receive information from the de-icing management system 440 and the external data sources 430 to generate predictions about the de-icing treatment. The intelligent agent 1 410 may also receive information from the intelligent agent 3 425 that predicts in which order aircrafts that requested de-icing treatment are the most likely to arrive at the de-icing area where they will be assigned a de-icing bay (or in short, aircraft arrival). Those predictions may be returned to the intelligent agent 1 410 to improve its decisions. The intelligent agent 3 425 may receive information from the de-icing management system 440 and the external data sources 430 to generate predictions about aircraft arrival.

The components to the communication flow 400 may include any combination of the intelligent agent 1 410, the intelligent agent 2 420, and the intelligent agent 3 425. The following are examples of these possible combinations. The intelligent agent 1 410 may be on its own if the queue is known, such as when using GPS tracking or when relying on a table of values. The intelligent agent 2 420 may be on its own if all that is needed is de-icing duration. The intelligent agent 3 425 may be on its own if all that is needed is predictions of aircraft arrival at the de-icing area. The intelligent agent 1 410 and the intelligent agent 2 420 may operate together without a third intelligent agent if predictions of aircraft arrival at the de-icing area are not needed or are provided by another means (e.g., a lookup table). The intelligent agent 1 410 and the intelligent agent 3 425 may operate together without a second intelligent agent if de-icing duration is not needed or are provided by another means (e.g., a lookup table). The intelligent agent 2 420 and the intelligent agent 3 425 may operate together without a first intelligent agent if operation optimization is not needed or is provided by another means (e.g., a lookup table). The intelligent agent 1 410, the intelligent agent 2 420, and the intelligent agent 3 425 may operate together if all their functions are desired or needed.

### Implementation of Intelligent Agent 1

In at least one embodiment, the intelligent agent 1 410 uses operation research algorithms designed to solve optimization problems. The optimization problem is split into two generic subproblems: open-shop scheduling problem and routing problem. In the first subproblem, open-shop scheduling, each task can be assigned to any station and the objective is to minimize an objective such as the total processing time. In the implementation of this subproblem, the sub-objective is balancing tasks (assignment of aircrafts) in the stations (de-icing areas). The second subproblem, routing, is linked to resources used by the stations. The objective of this second subproblem is to assign resources (de-icing trucks) to the tasks so that they complement each other. This subproblem is known as a routing problem with timewindow. These problems may be solved through a custom heuristic program or through an operation research solver such as Hexaly Optimizer from the company Hexaly^{™}.

The intelligent agent 1 410 accounts for operational constraints in order to make feasible and optimal decisions. The optimization algorithm may account for one or more constraints, which include:
- The assignment accounts for varying aircraft sizes and types to ensure compatibility with multiple de-icing areas size and capabilities.
- The number of de-icing areas and de-icing trucks is limited.
- The model is able to handle dynamic updates, such as last-minute flight schedule changes or equipment malfunctions.
- The model incorporates prioritization rules based on flight schedules, airline preferences, air traffic control requirements, or aircraft assigned departure runway.
- The model sequences aircrafts to minimize congestion of aircrafts on taxiways and routes; aircrafts cannot cross each other when moving towards their assigned area.
- The aircrafts may arrive in different queues (at different taxiways) sharing the same de-icing bays.

The intelligent agent 1 410 may handle a large amount of data that would be infeasible for a human operator to process to provide optimized solutions, such as:
1. Real-time flight information: Access to up-to-date flight status (up to cold-storage).
2. Aircraft data: Information on aircraft types, sizes, and de-icing requirements for each scheduled flight
3. Airport layout data: Detailed information about the location and capacity of de-icing bays, as well as taxiway routes.
4. De-icing vehicle inventory: A current list of all available de-icing vehicles, including their capabilities and operational status
5. Weather data: Real-time and forecast weather information, particularly temperature, precipitation, and wind conditions.
6. De-icing time estimates: Standard time estimates for de-icing different aircraft types under various weather conditions.
7. Prioritization rules: Clear guidelines on how to prioritize flights based on factors like scheduled departure times, connecting flights, and airline preferences.
8. Pad capacity information: Data on how many and what types of aircraft each de-icing pad can accommodate simultaneously, as well as de-icing pad status including bay occupancy and bay availability (e.g., opened or closed).
9. Regulatory information: Up-to-date knowledge of any relevant regulations or airportspecific rules that may impact de-icing operations.

In at least one implementation, the intelligent agent 1 410 uses historical data, such as past de-icing operation data, to help in validating and refining the model that the intelligent agent 1 410 employs.

In at least one implementation, the intelligent agent 1 410 is used on its own to improve the training of operators, the operators being, for example, humans and/or bots.

In at least one implementation, the intelligent agent 1 410 is used to optimize the locations of the de-icing trucks for de-icing treatment performed at the terminal gates. In this implementation, the aircrafts remain close to their terminal gate until the de-icing treatment is completed. The intelligent agent 1 410 may predict the de-icing trucks or the number of de-icing trucks to assign to specific waiting areas around the terminal, as well as the de-icing trucks or the number of de-icing trucks from those waiting areas to assign to the treatment of a specific aircraft at its gate. The intelligent agent 1 410 optimizes the routing of the de-icing trucks and the order in which they apply de-icing treatment to aircrafts that requested de-icing treatment.

### Implementation of Intelligent Agent 2

In at least one embodiment, the intelligent agent 2 420 estimates the duration of a de-icing treatment and/or de-icing fluid quantity required (or in short, estimating de-icing requirements). In order to optimize the assignment of resources and aircrafts, it may be advantageous to account for the amount of time and the amount of de-icing fluid required for each treatment requested by each aircraft. Although typical values for duration and quantities can be gathered in a table, it is known that many factors can significantly influence the duration and quantities required. Treatment duration and fluid quantities required for a complete de-icing may increase tenfold or more during winter storms compared to clear weather conditions.

The intelligent agent 2 420 may implement one or multiple machine learning regression models that learn relationships (or correlations) between de-icing treatments duration and/or quantities and different factors. These models are used to predict de-icing treatments duration and/or fluid quantities for new de-icing requests under different resource conditions. The predicted duration and/or fluid quantities are provided to the intelligent agent 1 410 responsible for the allocation of resources and aircrafts, in order to improve its optimization process and thus the qualities of its decisions through better estimations of the relative benefits of different allocation scenarios.

In at least one implementation, the intelligent agent 2 420 employs AI models that use several (e.g., 10, 20, or more) parameters, including weather conditions and aircraft characteristics, to predict the optimal quantities of different types of glycol fluids to be used for de-icing and/or anti-icing treatments. The forecasts are converted into application times, helping to assess performance and optimize supplies. The performance of glycol usage is evaluated through the AI models. These models are developed and trained using operational data from optimal spraying situations, for example based on the work of experienced operators. For example, under specific weather conditions, spraying an aircraft of type Y should require approximately X liters of glycol.

In at least one implementation, the intelligent agent 2 420 employs an advanced regression model (e.g., gradient boosting regression framework). This is used for making accurate predictions by considering numerous factors. It is a model that may handle complex parameters effectively. Alternatively, or in addition, the intelligent agent 2 420 employs neural networks, such as convolutional neural networks (CNN) or recurrent neural networks (RNN).

In at least one implementation, the intelligent agent 2 420 employs a model that considers multiple factors, such as:
- Weather Conditions: both current and historical, since landing.
- Type of Contaminant: such as snow or frost on the aircraft.
- Aircraft Characteristics: specific model of each aircraft.
- Operation Characteristics: de-icing trucks, operators.
- De-icing Requirements: specified by the pilot for each part of the aircraft.
- Time on Ground: time spent on the ground before de-icing, influencing glycol requirements.

In at least one implementation, the intelligent agent 2 420 may obtain data to train and use AI models, such as a current location of the aircrafts, the de-icing treatment that is required, the de-icing treatment that is applied, start and end timestamps of each step of a de-icing process, or the recent history of de-icing data (e.g., flight number, aircraft identifier, time taken to de-ice, quantity of glycol used) for aircrafts that received de-icing treatments in a previous time period (e.g., 30 minutes, 1 hours, 3 hours, 6 hours, 12 hours, 1 day, etc.).

In at least one implementation, the intelligent agent 2 420 obtains data using sensors that may make real-time measurements, such as the changes in the weather conditions, the beginning and end of de-icings, or the quantities sprayed.

In at least one implementation, the intelligent agent 2 420 improves prediction accuracy using physical and operational characteristics of the aircraft. For example, the exact aircraft surface area might be used (instead of, or in addition to, the parking area). By using the exact surface area of the aircraft, the prediction will be more accurate, as the amount of contaminants (snow, ice, frost) is related to the aircraft's surface.

In at least one implementation, the intelligent agent 2 420 improves prediction accuracy using time spent on the ground. The prediction will be more accurate, as it will better estimate the accumulation of contaminants during this period.

In at least one implementation, the intelligent agent 2 420 improves prediction accuracy using weather during ground time (e.g., complete weather conditions). Combining the weather during ground time with current weather allows the model to more accurately determine the volume of glycol required.

In at least one implementation, the intelligent agent 2 420 improves prediction accuracy using granular meteorological data (e.g., hourly accuracy). This may be added to data related to daily precipitation. Using sources like Accuweather^{™} or SureWX^{™} provides hourly data, increasing the model's precision.

In at least one implementation, the intelligent agent 2 420 improves prediction accuracy by handling outliers. Alternatively, or in addition, further data preparation may be used to improve predication accuracy.

### Use of Results Generated by Intelligent Agent 2

The use of results generated by the intelligent agent 2 420 via an API and visualizations of key parameters may have an impact on optimizing de-icing operations.

Instant Estimates: Access to real-time glycol estimates may allow for quick adaptation (e.g., real-time adaptation) to changing weather conditions, ensuring efficient allocation of de-icing resources. For example, relevant information may be sent directly (e.g., in real time) to computing devices (e.g., tablets) inside de-icing trucks and in the control tower.

Operations Management: The model's predictions help improve the planning (e.g., accurate planning) of de-icing operations, including managing aircraft queues and distributing de-icing bays. For example, relevant information may be sent directly (e.g., in real time) to intelligent agent 1 410. Alternatively, or in addition, the relevant information may be sent to computing devices used by operators (e.g., humans or bots) to assist in decision making or trigger automatic actions.

Objective Basis for Glycol Usage: The model helps establish de-icing standards based on performance criteria, reducing variability in glycol usage for similar situations.

### Machine Learning Example

By way of example, suppose a de-icing management system has recorded several years (e.g., 5, 10, or even more years) of information pertaining to each de-icing treatment performed on each aircraft in multiple (e.g., 10 to 20) different airports. The recorded information may include the timestamps (date and time) for the beginning and end of each de-icing treatment, as well as de-icing fluid quantities used for these treatments. This information on de-icing treatments may have been entered manually by operators in the past and now automatically through sensors and communications systems installed on de-icing trucks. The machine learning models can learn relationships through proper training on the historical data of the de-icing management system. These models can also leverage data across different airports, improving their accuracy for treatment estimations in airports having a shorter history, or having less data recorded due to fewer cold weather events, or lower aircraft traffic.

The machine learning regression models of the intelligent agent 2 420 accounts for different factors influencing the duration and/or fluid quantities required for a de-icing treatment, through a proper selection of data features. These factors may include one or many of the following, but are not restricted to:
- Aircraft characteristics: (a) model; (b) size; (c) features (e.g., type of motors).
- De-icing treatment requested: (a) de-icing; (b) anti-icing; (c) parts of the airplane requiring treatment (e.g., wings, stabilizers, vertical stabs, fuselage, radome, nose gear, main gears, undercarriage, underwings, underflaps, understabs, rudder, wiper, engines).
- Weather conditions: (a) snow; (b) frost; (c) wind; (d) temperature; (e) ice; (f) amount of precipitation.
- Time of the aircraft elapsed since its arrival at the airport, cumulated precipitations since arrival.
- The number of de-icing trucks available for the treatment.
- Trucks and/or employees identifiers (different amount of experience).
- The airline owning the aircraft (different policies regarding de-icing treatments).
- De-icing area location.
- Actual duration/quantities that were required for aircrafts de-icing completed recently at this airport under similar circumstances.

The data related to these factors may be provided by the de-icing management system, or by other sources such as weather data (historical, current, or forecast) from external providers.

The intelligent agent 2 420 can use machine learning techniques and algorithms for implementing machine learning regression models. These regression models are part of the supervised learning paradigm of artificial intelligence (AI), and may include, for example, support vector machines (SVM), multilinear regression, decision trees, or neural networks (including multilayer perceptron and deep neural networks). More specifically, given the large amount of data available, gradient boosting decision trees, such as XGboost and LightGBM regression models, due to their high performance, scalability and good handling of categorical data types as input features, may be suitable.

### Implementation of Intelligent Agent 3

In at least one embodiment, the intelligent agent 3 425 predicts in which order aircrafts from the cold storage that requested de-icing treatment are the most likely to arrive at the de-icing area where they will be assigned a de-icing bay (or in short, aircraft arrival). The intelligent agent 3 425 may receive information from a de-icing management system and/or external data sources to generate predictions about arrival order and time. In layouts where multiple entry points (taxi in) are present for a de-icing area, the intelligent agent 3 425 predicts the likely arrival order for each entry point. In order to optimize the assignment of resources and aircrafts, it may be advantageous to account for the order and arrival time of each aircraft at de-icing areas. It is known that many factors can significantly influence the arrival order.

The intelligent agent 3 425 may implement one or multiple machine learning regression models that learn relationships (or correlations) between arrival time and order and different factors. These models may be used to predict the aircraft arrival sequence at the de-icing areas. The predicted aircraft arrival order and time may be provided to the intelligent agent 1 410 responsible for the allocation of resources and aircrafts, in order to improve its optimization process and thus the qualities of its decisions through better estimations of the relative benefits of different allocation scenarios.

In at least one implementation, the intelligent agent 3 425 employs AI models that use several (e.g., 2, 5, or more) parameters, including aircraft location at the terminal and de-icing areas layout and aircraft status, to predict the most likely arrival order and time of the aircrafts. They may also predict the entry point of the de-icing zone an aircraft is most likely to use. These models are developed and trained using operational data from de-icing request time and arrival time, for example based on previous de-icing operations.

The intelligent agent 3 425 may handle a large amount of data that would be infeasible for a human operator to process to provide optimized solutions, such as:
1. Real-time flight information: Access to up-to-date flight status (up to cold-storage).
2. Aircraft data: Information on aircraft types, sizes, and de-icing requirements for each scheduled flight.
3. Airport layout data: Detailed information about the location and capacity of de-icing bays, as well as taxiway routes.
4. Weather data: Real-time and forecast weather information, particularly temperature, precipitation, and wind conditions.
5. Prioritization rules: Clear guidelines on how to prioritize flights based on factors like scheduled departure times, connecting flights, and airline preferences.
6. Pad capacity information: Data on how many and what types of aircraft each de-icing pad can accommodate simultaneously.
7. Regulatory information: Up-to-date knowledge of any relevant regulations or airportspecific rules that may impact de-icing operations.

The intelligent agent 3 425 can use machine learning techniques and algorithms for implementing machine learning regression models. These regression models are part of the supervised learning paradigm of artificial intelligence (AI), and may include, for example, support vector machines (SVM), multilinear regression, decision trees, or neural networks (including multilayer perceptron and deep neural networks). More specifically, given the large amount of data available, gradient boosting decision trees, such as XGboost and LightGBM regression models, due to their high performance, scalability, and good handling of categorical data types as input features, may be suitable.

### Advantages of Implementations of Intelligent Agents

In at least some embodiments, different implementations of the intelligent agents, such as the intelligent agent 1 410, may provide one or more technical advantages, depending on which methods/approaches/tools are used.

Some possible advantages of an implementation using reinforcement learning (RL) or relevant machine learning methods include: (1) Adaptable to changing environments, suitable for a continuously changing system; (2) Can learn and improve over time, potentially finding optimal strategies that humans might not consider; (3) Works well with large state and action spaces, common in complex scheduling problems; (4) Can handle uncertainty and stochasticity in the environment.

Some possible advantages of an implementation using heuristic methods (or simulation) include: (1) Can be designed to provide quick solutions, suitable for real-time decision-making; (2) Often simpler to implement and understand compared to RL or commercial solvers; (3) Can be tailored specifically to a specific problem domain and constraints; (4) Generally requires less computational resources than RL or complex optimization algorithms.

Some possible advantages of an implementation using a global optimization solver such as Hexaly Optimizer include: (1) Designed to handle complex optimization problems efficiently; (2) Often provides high-quality solutions in reasonable time frames; (3) Comes with professional support and documentation; (4) May include features specifically designed for scheduling and resource allocation problems; (5) Generally easier to implement than developing a custom RL solution.

Some possible advantages of an implementation using multi-agent simulation include: (1) Can capture complex interactions and emergent behaviors; (2) Allows for detailed modeling of individual entity characteristics; (3) Provides a visual and intuitive representation of the system; (4) Can be used to test various strategies and scenarios.

Some possible advantages of an implementation using open-source or commercial solvers providing any one or combination of optimization strategies, such as Linear Programming (LP), Mixed-Integer Linear Programming (MILP), Integer Programming (IP), Quadratic Programming (QP), Mixed-Integer Quadratic Programming (MIQP), Quadratically Constrained Programming (QCP), Mixed-Integer Quadratically Constrained Programming (MIQCP), Mixed-Integer Nonlinear Programming (MINLP), Constraint Programming (CP), Constraint Satisfaction Problem (CSP), Boolean Satisfiability Problem (SAT), Pseudo-Boolean Optimization (PB), include: (1) Balancing the minimization of processing time while handling various problem complexity, and (2) Generally easier to implement than developing a custom RL solution or heuristic.

### Variable Analysis

Variable analysis may be used for the development of the intelligent agent 2 420. This may include one or more of the following:
- Feature Importance: a technique used to identify the most influential factors on glycol quantity.
- Lasso Regularization (if feature importance is insufficient): an alternative method for selecting key variables if needed.
- Temporal Feature Extraction: analyze the impact of weather conditions on the aircraft since landing.
- Hyperparameter Optimization: using optimization libraries like Optuna to adjust model parameters to improve prediction accuracy.
- Prediction Explanations: utilizing the Partial Dependence Plot (PDP) technique to visualize the influence of each parameter on the predicted glycol quantity.
- Identification of Critical Factors: visualizations (e.g., of important parameters) may help identify the factors that most influence glycol consumption, enabling precise adjustments to de-icing procedures based on these factors.

In at least one implementation, the intelligent agent 2 420 employs a model that obtains reliable estimation. For example, a bootstrap method may be used to provide confidence intervals for predictions, ensuring reliable estimates of the required glycol quantity.

### Optimization of Schedule for De-icing Operations

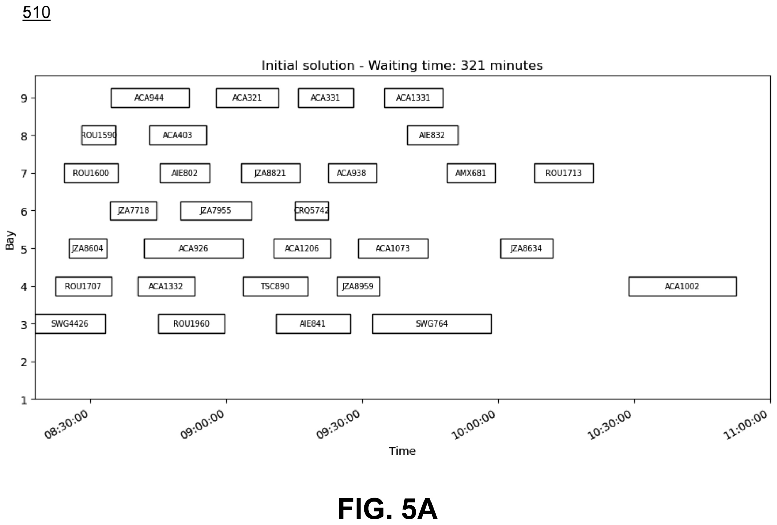

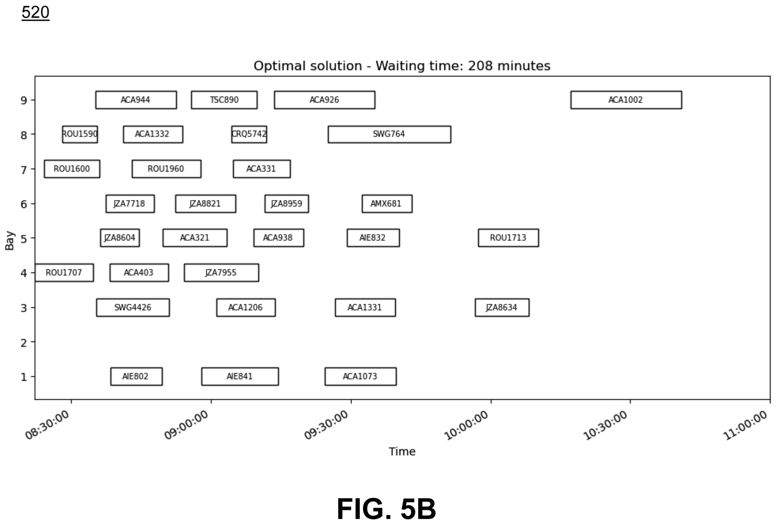

FIG. 5A depicts a first graph 510 of an example of an initial schedule for de-icing operations prior to optimization by a de-icing management system in accordance with one or more non-limiting implementations of the present technology. FIG. 5B depicts a second graph 520 of an example of an optimized schedule for de-icing operations after optimization by a de-icing management system in accordance with one or more non-limiting implementations of the present technology.

FIGS. 5A and 5B illustrate the assignment of a sequence of aircrafts (tail numbers) into 9 bays as a function of time. The length of the bars represents the period of time where a bay is occupied by an aircraft, including the time required for applying the de-icing treatment.

The first graph 510 shows the actual assignment of aircrafts to de-icing bays that was performed manually by operators. The first graph 510 shows an initial solution that uses 7 bays and has a waiting time of 321 minutes.

The second graph 520 shows the optimal assignment of aircrafts with one implementation of the intelligent agent 1 410 (for operation optimization). The second graph 520 shows an optimal solution that uses 8 bays and has a waiting time of 208 minutes.

The second graph 520 shows that on average aircrafts can be assigned to de-icing bays and start the de-icing earlier than with manual assignment.

### Intelligent Agent Predictions

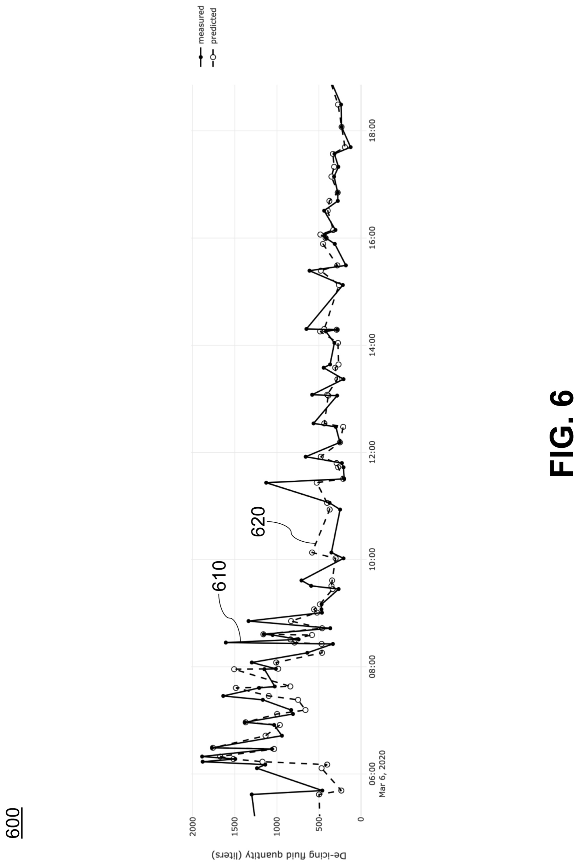

Now turning to FIG. 6, there is a graph 600 of intelligent agent predictions of de-icing fluid quantities by a de-icing management system in accordance with one or more non-limiting implementations of the present technology.

In graph 600, the x-axis represents time, labeled by times every two hours, including 06:00, 08:00, 10:00, 12:00, 14:00, 16:00, and 18:00. In graph 600, the y-axis represents de-icing fluid quantity in liters, labeled by 500s of liters, including 500L, 1000L, 1500L, and 2000L. Graph 600 illustrates measured de-icing fluid quantities 610 (in liters) used in a sequence of de-icing treatments in an airport, as well as predicted de-icing fluid quantities 620 (in liters) from intelligent agent 2 420 (for de-icing duration / fluid quantities). Variations in fluid quantities for each de-icing treatment depend on weather conditions, aircraft characteristics, aircraft parts requiring de-icing, as well as on many other factors. Information about predicted fluid quantities and or predicted duration of de-icing treatments can be provided to the intelligent agent 1 410 (for operation optimization) in order to improve its decisions for allocating resources and assigning aircrafts.

### Method for Optimizing De-icing Operations for Aircrafts

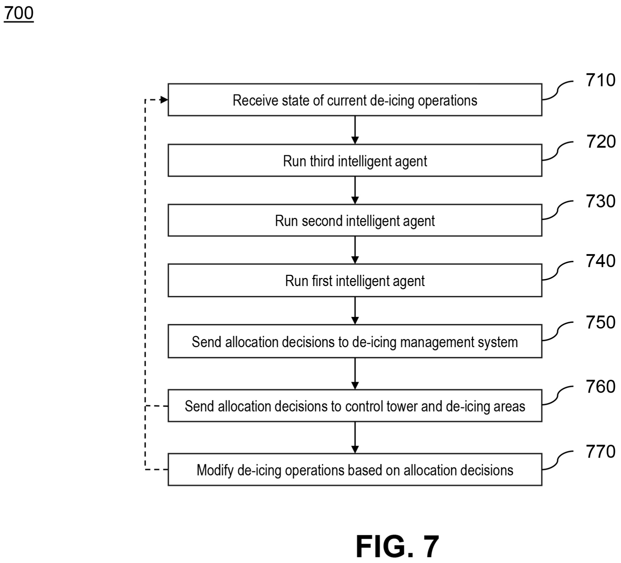

FIG. 7 depicts a flowchart of a method 700 for optimizing de-icing operations of a plurality of aircrafts in accordance with one or more non-limiting implementations of the present technology.

In one or more implementations, the server 220 comprises a processing device such as the processor 110 and/or the GPU 111 operatively connected to a non-transitory computer readable storage medium such as the solid-state drive 120 and/or the random-access memory 130 storing computer-readable instructions. The processing device, upon executing the computer-readable instructions, is configured to or operable to execute the method 700.

Alternatively, or in addition, the processing device may refer to multiple processing devices participating in the de-icing operations, such as processing devices managing or located at a control tower or any of the de-icing resources 300.

Alternatively, or in addition, the processing device may refer to multiple processing devices involved in the communication flow 400.

The method 700 begins at processing step 710.

According to processing step 710, the processing device receives a state of current de-icing operations from at least one of a control tower and one of a plurality of de-icing areas. The control tower may have centralized control over the de-icing areas so that only the control tower is needed to obtain the state of current de-icing operations. Alternatively, or in addition, the state of current de-icing operations may be obtained from one or more of the de-icing areas.

According to processing step 720, the processing device runs a third intelligent agent to generate a prediction of an order that aircrafts from the cold storage that requested de-icing treatment are the most likely to arrive at the de-icing area where they will be assigned a de-icing bay. This may be based at least in part on information from the de-icing management system and/or external data sources. The third intelligent agent may be called by the second intelligent agent for various scenarios. For example, the second intelligent agent may base duration times at the de-icing areas on the aircraft arrival predictions. For each potential allocation (i.e., each scenario), the second intelligent agent may be configured to call the third intelligent agent to receive estimates of aircraft arrival times. Having called the third intelligent agent for various scenarios, the second intelligent agent can then decide on duration times.

According to processing step 730, the processing device runs a second intelligent agent to generate estimated de-icing requirements based at least in part on the state of the current de-icing operations. The second intelligent agent may be called by the first intelligent agent for various scenarios. For example, the first intelligent agent may consider various potential allocations of resources and de-icing areas. For each potential allocation (i.e., each scenario), the first intelligent agent is configured to call the second intelligent agent to receive estimates of de-icing duration and quantities. Having called the second intelligent agent for various scenarios, the first intelligent agent can then decide on the optimal sequence of decisions.

According to processing step 740, the processing device runs the first intelligent agent to optimize decisions regarding allocations of the plurality of aircrafts and resources relating to the de-icing areas. This may be based at least in part on the state of the current de-icing operations and the estimated de-icing requirements. This may thereby generate allocation decisions at least for the selected ones of the plurality of de-icing areas (or possibly for all of the plurality of de-icing areas). The processing device may run the first intelligent agent after running the second intelligent agent, before running the second intelligent agent, or concurrently with the first intelligent agent (e.g., as parallel processes). Alternatively, or in addition, the processing device may run the second intelligent agent as a subroutine (or thread) of the first intelligent agent. Alternatively, or in addition, the first intelligent agent may cause the second intelligent agent to start running.

According to processing step 750, the processing device sends the allocation decisions to the de-icing management system. This may be an optional processing step, for example, when a server separate from the control tower runs the intelligent agents and generates the allocation decisions, so that the de-icing management system needs to receive the allocations decisions from the server.

According to processing step 760, the processing device sends the allocation decisions to the control tower and the selected ones of the plurality of de-icing areas to cause de-icing of at least some of the plurality of aircrafts. The selected ones of the plurality of de-icing areas may be any two or more of the de-icing areas, possibly all of the de-icing areas. The at least some of the plurality of aircrafts may be any two or more of the aircrafts, possibly all of the aircrafts. Optionally, the method 700 may update the state of current de-icing operations and return to processing step 710.

According to processing step 770, the processing device modifies de-icing operations based on the allocation decisions. This may be an optional processing step, for example, where the processing device causes de-icing of at least some of the plurality of aircrafts at the selected ones of the plurality of de-icing areas. Alternatively, or in addition, the processing device may send the allocation decisions to at least one of the control tower and the selected ones of the plurality of de-icing areas so that computing devices (or operators or bots) may cause the de-icing (e.g., in real time, automatically, or manually). Optionally, the method 700 may update the state of current de-icing operations and return to processing step 710.

The method 700 then ends.

In at least one implementation of the method 700, the first intelligent agent generates the allocation decisions using operation research algorithms (which may include, for example, solving an optimization problem expressed in the form of an open-shop scheduling problem and/or a routing problem).

In at least one implementation of the method 700, the first intelligent agent generates an initial solution for the allocations of the plurality of aircrafts and resources relating to the de-icing areas. The initial solution may be used as a starting point by the operation research algorithms in order to improve the speed of resolution of the operation research algorithms. The running of the first intelligent agent to optimize decisions regarding allocations of the plurality of aircrafts and resources relating to the de-icing areas may be based at least in part on the initial solution. The first intelligent agent may generate the initial solution, for example, using a simpler and/or faster algorithm that is rules-based, follows a heuristic, and/or uses a lookup table.

In at least one implementation of the method 700, the first intelligent agent generates one or more potential solutions for the plurality of aircrafts (e.g., in the cold storage) before the plurality of aircrafts arrive at a pad entry point. This may be done in order to reduce the delay between arrival times at the pad entry point and communication to the plurality of aircrafts (e.g., to their pilots) of de-icing zone assignations (for the plurality of aircrafts) recommended by the first intelligent agent. The generating of the one or more potential solutions may be done before the running of the first intelligent agent to optimize decisions regarding allocations of the plurality of aircrafts and resources relating to the de-icing areas, and the one or more potential solutions may be sent to the control tower and the selected ones of the plurality of de-icing areas.

In at least one implementation of the method 700, the method 700 further comprises running a second intelligent agent to generate estimated de-icing requirements based at least in part on the state of the current de-icing operations; and wherein optimization of decisions by the first intelligent agent is further based on the estimated de-icing requirements.

In at least one implementation of the method 700, the second intelligent agent generates estimated de-icing requirements using one or more machine learning regression models that learn relationships involving at least one of de-icing treatment durations or de-icing treatment quantities.

In at least one implementation of the method 700, the de-icing management system is further configured to cause de-icing of at least some of the plurality of aircrafts based on the allocation decisions.

In at least one implementation of the method 700, the allocation decisions comprise use of the resources relating to the de-icing areas, the resources comprising one or more of a cold storage, paths for aircrafts in motion to the de-icing areas, de-icing trucks, input taxiways, or output taxiways.

In at least one implementation of the method 700, the first intelligent agent monitors arrival of the plurality of aircrafts in the input taxiways, thereby adding to the state of the current de-icing operations.

In at least one implementation of the method 700, the first intelligent agent generates the allocation decisions to assign the plurality of aircrafts from one of the input taxiways to one of the de-icing areas, taking account one or more of a backlog of aircrafts, an occupancy and capacity of the de-icing areas, and locations of the de-icing trucks.

In at least one implementation of the method 700, the first intelligent agent generates the allocation decisions to assign the plurality of aircrafts from one of the input taxiways to one of the de-icing areas to further include re-allocating the de-icing trucks to different de-icing areas.

In at least one implementation of the method 700, optimization of decisions by the first intelligent agent is further based on external data sources, the external data sources comprising at least one of weather measurements, weather forecasts, or schedule plans for the plurality of aircrafts.

In at least one implementation of the method 700, the de-icing trucks employ de-icing truck applications, which may use telemetry. The deployment of telemetry may eliminate the manual entry of spraying stops and starts, as well as the volumes of liquid used. For example, telemetry may be measured in real time by sensors so that values are sent automatically to different parts of the de-icing management system.

In at least one implementation, the method 700 is performed in a different order. In at least one implementation, the method 700 is performed in such a manner that some or all of the steps are carried out iteratively.

In at least one embodiment, a first modified method for optimizing de-icing operations of a plurality of aircrafts comprises only some of the steps in method 700. In such a case, the first modified method may replace some of the missing steps with other steps to further achieve the goals of the present technology.

In at least one embodiment, a second modified method for optimizing de-icing operations of a plurality of aircrafts comprises all of the steps in method 700, as well as one or more additional steps. In such a case, the second modified method may add steps to further achieve the goals of the present technology.

In at least one embodiment, a method for optimizing de-icing operations of a plurality of aircrafts comprises processing steps based on those described in method 700. The method comprises: receiving a state of current de-icing operations from at least one of a control tower and one of a plurality of de-icing areas; running a first intelligent agent to optimize decisions regarding allocations of the plurality of aircrafts and resources relating to the de-icing areas, based at least in part on the state of the current de-icing operations, thereby generating allocation decisions at least for the selected ones of the plurality of de-icing areas; and sending the allocation decisions to the control tower and the selected ones of the plurality of de-icing areas.

In at least one embodiment, a non-transitory computer-readable medium (CRM) has stored thereon computer-executable instructions that, when executed by at least one processor, cause the at least one processor to perform the method 700. The CRM may also have stored thereon alternative, additional, or fewer computer-executable instructions, such as those of any of the implementations of method 700 discussed herein.

In at least one embodiment, a system for optimizing de-icing operations of a plurality of aircrafts according to method 700 comprises: a de-icing management system and a server. The de-icing management system is in communication with a control tower and a plurality of de-icing areas. The de-icing management system is configured to: (a) receive a state of current de-icing operations from at least one of the control tower and one of the plurality of de-icing areas; (b) receive allocation decisions from a server; and (c) send the allocation decisions to the control tower and selected ones of the plurality of de-icing areas. The server is in communication with the de-icing management system. The server is configured: (a) receive the state of the current de-icing operations from the de-icing management system; (b) run a first intelligent agent to optimize decisions regarding allocations of the plurality of aircrafts and resources relating to the de-icing areas, based at least in part on the state of the current de-icing operations, thereby generating the allocation decisions at least for the selected ones of the plurality of de-icing areas; and (c) send the allocation decisions to the de-icing management system. The system may also have alternative, additional, or fewer features, such as those of any of the implementations of method 700 discussed herein.

It should be apparent to those skilled in the art that at least some implementations of the present technology aim to expand a range of technical solutions for addressing one or more particular technical problems faced by de-icing operations of aircrafts, such as inefficiency and cost (e.g., from a computing power standpoint) when operating on a large quantity of data, which may save computational resources, reduce computing power, or make more efficient use of network bandwidth.

It should be expressly understood that not all technical effects mentioned herein need to be enjoyed in each and every implementation of the present technology. For example, implementations of the present technology may be implemented without the user enjoying some of these technical effects, while other non-limiting implementations may be implemented with the user enjoying other technical effects or none at all.

Some of these steps and signal sending-receiving are well known in the art and, as such, have been omitted in certain portions of this description for the sake of simplicity. The signals can be sent-received using optical means (such as a fiber-optic connection), electronic means (such as using wired or wireless connection), and mechanical means (such as pressure-based, temperature based or any other suitable physical parameter based).

Modifications and improvements to the above-described implementations of the present technology may become apparent to those skilled in the art. The foregoing description is intended to be exemplary rather than limiting.

## Claims

1. A system for optimizing de-icing operations of a plurality of aircrafts, the system comprising:
a processor;
a non-transitory storage medium operatively connected to the processor, the non-transitory storage medium comprising computer-readable instructions;
the processor, upon executing the instructions, being configured for:
receiving a state of current de-icing operations from at least one of a control tower and one of a plurality of de-icing areas;
running a first intelligent agent to optimize decisions regarding allocations of the plurality of aircrafts and resources relating to the de-icing areas, based at least in part on the state of the current de-icing operations, thereby generating allocation decisions at least for selected ones of the plurality of de-icing areas; and
sending the allocation decisions to the control tower and the selected ones of the plurality of de-icing areas.

2. The system of claim 1, wherein the first intelligent agent generates the allocation decisions using operation research algorithms.

3. The system of claim 1 or 2, wherein the processor is further configured for running a second intelligent agent to generate estimated de-icing requirements based at least in part on the state of the current de-icing operations; and wherein optimization of decisions by the first intelligent agent is further based on the estimated de-icing requirements.

4. The system of any one of claims 1 to 3, wherein the second intelligent agent generates estimated de-icing requirements using one or more machine learning regression models that learn relationships involving at least one of de-icing treatment durations or de-icing treatment quantities.

5. The system of any one of claims 1 to 4, wherein the processor is further configured for causing de-icing of at least some of the plurality of aircrafts based on the allocation decisions.

6. The system of any one of claims 1 to 5, wherein the allocation decisions comprise use of the resources relating to the de-icing areas, the resources comprising one or more of a cold storage, paths for aircrafts in motion to the de-icing areas, de-icing trucks, input taxiways, or output taxiways, and wherein the first intelligent agent optionally monitors arrival of the plurality of aircrafts in the input taxiways, thereby adding to the state of the current de-icing operations.

7. The system of claim 6, wherein the first intelligent agent generates the allocation decisions to assign the plurality of aircrafts from one of the input taxiways to one of the de-icing areas, taking account one or more of a backlog of aircrafts, an occupancy and capacity of the de-icing areas, and locations of the de-icing trucks to optionally further include re-allocating the de-icing trucks to different de-icing areas.

8. The system of claim 6 or 7, wherein the optimization of decisions by the first intelligent agent is further based on external data sources, the external data sources comprising at least one of weather measurements, weather forecasts, or schedule plans for the plurality of aircrafts.

9. A method for optimizing de-icing operations of a plurality of aircrafts, the method being executed by a processor, the method comprising:
receiving a state of current de-icing operations from at least one of a control tower and one of a plurality of de-icing areas;
running a first intelligent agent to optimize decisions regarding allocations of the plurality of aircrafts and resources relating to the de-icing areas, based at least in part on the state of the current de-icing operations, thereby generating allocation decisions at least for selected ones of the plurality of de-icing areas; and
sending the allocation decisions to the control tower and the selected ones of the plurality of de-icing areas.

10. The method of claim 9, wherein the first intelligent agent generates the allocation decisions using operation research algorithms.

11. The method of claim 9 or 10, further comprising running a second intelligent agent to generate estimated de-icing requirements based at least in part on the state of the current de-icing operations; and wherein optimization of decisions by the first intelligent agent is further based on the estimated de-icing requirements.

12. The method of any one of claims 9 to 11, wherein the second intelligent agent generates estimated de-icing requirements using one or more machine learning regression models that learn relationships involving at least one of de-icing treatment durations or de-icing treatment quantities.

13. The method of any one of claims 9 to 12, wherein the allocation decisions comprise use of the resources relating to the de-icing areas, the resources comprising one or more of a cold storage, paths for aircrafts in motion to the de-icing areas, de-icing trucks, input taxiways, or output taxiways, and wherein the first intelligent agent optionally monitors arrival of the plurality of aircrafts in the input taxiways, thereby adding to the state of the current de-icing operations.

14. The method of claim 16, wherein the first intelligent agent generates the allocation decisions to assign the plurality of aircrafts from one of the input taxiways to one of the de-icing areas, taking account one or more of a backlog of aircrafts, an occupancy and capacity of the de-icing areas, and locations of the de-icing trucks to optionally further include re-allocating the de-icing trucks to different de-icing areas.

15. The method of claim 13 or 14, wherein the optimization of decisions by the first intelligent agent is further based on external data sources, the external data sources comprising at least one of weather measurements, weather forecasts, or schedule plans for the plurality of aircrafts.
